# FASCICULE DE BREVET EUROPEEN

(11) **EP 2 913 231 B1**
(45) Date de publication et mention de la délivrance du brevet: **30.11.2016**
(21) Numéro de dépôt: 15156044.8
(22) Date de dépôt: 23.02.2015
(51) Int. Cl.: B60R 21/02

(54) **Dispositif de protection pour des sièges coulissants d'un véhicule utilitaire**
Schutzvorrichtung für Schiebesitze eines Nutzfahrzeugs
Protection device for sliding seats of a commercial vehicle

(30) Priorité: 28.02.2014 FR 1451641
(43) Date de publication de la demande: 02.09.2015
(73) Titulaire: PEUGEOT CITROËN AUTOMOBILES SA, 78140 Vélizy-Villacoublay (FR); Grupo Antolin-Ingenieria SA, 09007 Burgos (ES)
(72) Inventeur: Duvivier, Arnaud M., 91120 Palaiseau (FR); Hayat, David, 78770 Auteuil (FR); Bauvineau, Laurent M., 92160 Antony (FR); Counago Gonzalez, Marcos, 36475 Porrino (Pontevedra) (ES); Vazquey Sabariego, Jose Ignacio, 36475 Porrino (Pontevedra) (ES); Sa Coutinho, Lionel, 92400 Courbevoie (FR)

(56) Documents cités:
- EP-A2- 2 113 427
- WO-A1-2009/151362
- FR-A1- 2 876 637
- US-A1- 2010 201 148

## Description

L'invention concerne les véhicules automobiles et utilitaires, et plus précisément certains dispositifs de protection qui sont installés dans les habitacles de tels véhicules et qui sont destinés à protéger les sièges conducteur et passager(s) avant situés dans le rang un.

Certains véhicules (automobiles et) utilitaires comprennent un habitacle délimité notamment par un plancher sur lequel sont installés des sièges conducteur et passager(s) avant qui doivent être protégés par un dispositif de protection (ou « d'arrêt de charge ») afin que les objets installés temporairement derrière eux ne viennent pas heurter leur face arrière, ce qui pourrait les endommager, voire blesser les passagers qu'ils accueillent.

Ce dispositif de protection comprend généralement une cloison de protection comportant une plaque rigide, ainsi qu'éventuellement une grille dans une partie supérieure. Cette cloison de protection est généralement solidarisée fixement à la structure du véhicule (et plus précisément au plancher et au toit (ou pavillon) et/ou aux cloisons latérales), juste derrière la face arrière des sièges avant, ce qui limite leur possibilité de translation longitudinale, voire interdit une telle translation longitudinale.

Afin de permettre une translation longitudinale des sièges par rapport à des paires de glissières solidarisées fixement sur le plancher, il est possible de solidariser le dispositif de protection aux sièges, et plus précisément à leurs assises, et non pas à la structure du véhicule. Mais cela n'est pas optimal en termes de protection car des objets chargés peuvent enfoncer la partie supérieure de la cloison de protection et éventuellement passer entre cette dernière et le toit (ou pavillon).

Des dispositifs de protection plus sophistiqués ont également été proposés. Mais ils comprennent une cinématique qui s'avère généralement complexe à comprendre et/ou à utiliser pour l'usager, et/ou nécessitent un retrait (ou escamotage) du siège passager pour permettre un entraînement en rotation sur 90°, autour d'un axe vertical, de la cloison de protection, et/ou ils s'avèrent difficiles à installer dans l'habitacle (notamment du fait de la présence des paires de glissières), et/ou ils n'offrent pas de modularité (notamment du fait qu'ils ne permettent pas l'utilisation de l'espace avant libre offert par le rabattement du dossier du siège passager avant), et/ou ils ne permettent pas une optimisation de l'espace avant libre offert par le rabattement du dossier du siège passager avant.

Le document WO 2009/151362, qui est considéré comme l'état de la technique le plus proche, divulgue un dispositif de protection conforme le préambule de la revendication 1.

L'invention a donc notamment pour but d'améliorer la situation.

Elle propose notamment à cet effet un dispositif de protection destiné à être associé à des sièges conducteur et passager(s) comprenant chacun une paire de brancards d'assise montée en translation sur une paire de glissières solidarisée à un plancher d'un véhicule utilitaire, et comprenant deux cloisons de protection destinées à être installées respectivement derrière les sièges conducteur et passager(s).

Ce dispositif se caractérise par le fait :
- qu'il comprend deux paires de bielles comprenant des extrémités inférieures, destinées à être solidarisées à rotation respectivement aux brancards d'assise d'une paire associée, et des extrémités supérieures, et
- que chacune de ses cloisons de protection comprend une partie inférieure, couplée aux extrémités supérieures des bielles d'une paire associée, et une partie supérieure, destinée à être solidarisée à rotation à une partie d'un toit du véhicule, de sorte qu'elle puisse être entraînée en rotation par rapport à cette partie du toit en cas de translation de la paire de brancards d'assise associée par rapport à la paire de glissières correspondante.

On dispose ainsi d'un dispositif de protection très simple qui ne gêne pas les translations longitudinales des sièges avant, y compris indépendamment l'un de l'autre, et ne nécessite aucune intervention de l'usager.

Le dispositif selon l'invention peut comporter d'autres caractéristiques qui peuvent être prises séparément ou en combinaison, et notamment :
- la partie supérieure de l'une au moins des cloisons de protection peut comprendre une grille fixe ;
- la partie inférieure de chaque cloison de protection peut comprendre une paroi pleine ;
   ➢ la cloison de protection qui est destinée à être couplée au siège conducteur peut comprendre une paroi pleine fixe ;
   ➢ la cloison de protection qui est destinée à être couplée au siège passager(s) peut comprendre une paroi pleine comportant une première sous-partie fixe et une seconde sous-partie propre à se translater sensiblement parallèlement à la première sous-partie. En variante, la cloison de protection qui est destinée à être couplée au siège passager(s) peut comprendre une paroi pleine comportant une première sous-partie fixe et une seconde sous-partie amovible et propre à être solidarisée à la première sous-partie après avoir été retournée ;
- la partie supérieure de chaque cloison de protection peut comprendre une sous-partie d'au moins une charnière, destinée à être solidarisée à rotation à une sous-partie complémentaire de cette même charnière, qui est solidarisée fixement à une traverse définissant la partie du toit ;
- la partie inférieure de chaque cloison de protection peut comprendre deux pattes de fixation solidarisées à rotation respectivement aux extrémités supérieures des bielles de la paire associée.

L'invention propose également un véhicule utilitaire comprenant un toit, un plancher sur lequel sont solidarisées fixement deux paires de glissières auxquelles sont couplées en translation respectivement deux paires de brancards d'assise de sièges conducteur et passager(s), et un dispositif de protection du type de celui présenté ci-avant et solidarisé à rotation aux paires de brancards d'assise et à une partie du toit.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective (du côté avant), un exemple de réalisation d'un dispositif de protection selon l'invention solidarisé à rotation à des paires de glissières de sièges avant et à une partie d'un toit d'un véhicule utilitaire,
- la figure 2 illustre schématiquement, dans une vue en perspective (du côté avant), une traverse de toit sur laquelle est montée à rotation la partie supérieure du dispositif de protection de la figure 1,
- la figure 3 illustre schématiquement, dans une vue de côté, le dispositif de protection de la figure 1 avec ses deux cloisons de protection placées dans deux positions différentes du fait du placement des paires de brancards d'assise dans deux positions longitudinales différentes, et
- la figure 4 illustre schématiquement, dans une vue en perspective (du côté arrière), le dispositif de protection de la figure 1 au début du déplacement de la seconde sous-partie de la paroi pleine de sa paroi de protection destinée à être couplée au siège passager(s).

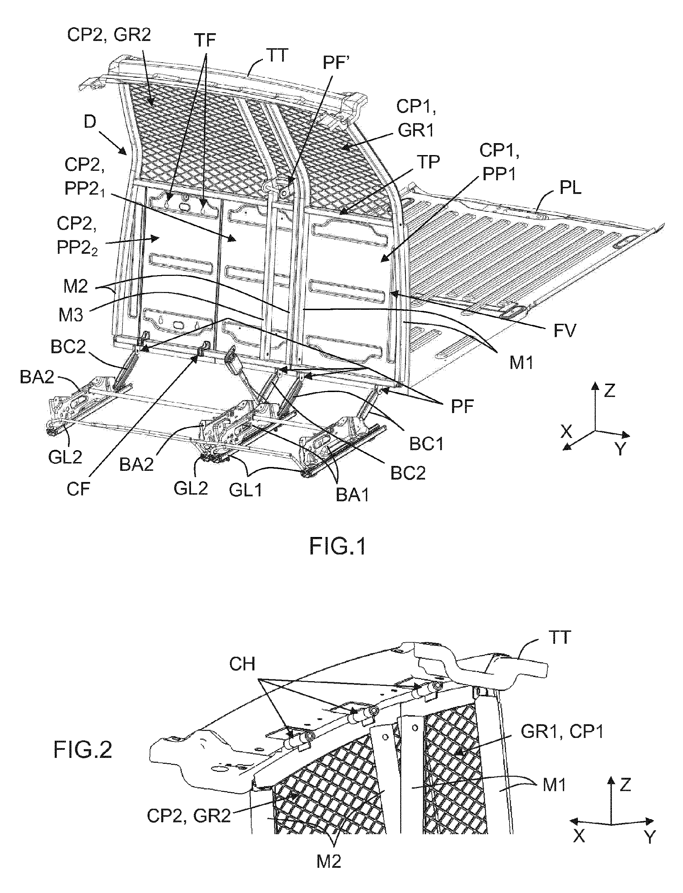

On a schématiquement représenté sur les figures 1 à 3 un exemple de réalisation d'un dispositif de protection (ou « d'arrêt de charge ») D selon l'invention, solidarisé à rotation à des paires de glissières GLj (j = 1 ou 2) de sièges conducteur et passager(s) avant et à une partie TT d'un toit d'un véhicule automobile et utilitaire.

Sur les figures, la direction X est la direction longitudinale du véhicule, laquelle est sensiblement parallèle aux côtés latéraux qui comportent les portes latérales (ou portières), la direction Y est la direction transversale du véhicule, laquelle est perpendiculaire à la direction longitudinale X et aux côtés latéraux, et la direction Z est la direction verticale du véhicule, laquelle est sensiblement perpendiculaire aux directions longitudinale X et transversale Y.

On considère dans ce qui suit, à titre d'exemple non limitatif, que le véhicule automobile et utilitaire est un fourgon, éventuellement de type dit K1 ou K2. Mais l'invention n'est pas limitée à ce type de véhicule automobile et utilitaire. Elle concerne en effet tout type de véhicule automobile et utilitaire comportant au moins un premier rang (avant) de sièges, dont l'un est dédié à l'accueil d'un conducteur et au moins un autre est dédié à l'accueil d'au moins un passager.

Le véhicule (automobile et utilitaire) étant ici un fourgon, il ne comprend dans son habitacle qu'un unique rang de sièges. Mais il pourrait comporter au moins deux rangs de sièges (dont un avant).

Par ailleurs, dans l'exemple non limitatif illustré sur la figure 1, l'unique rang (un) ne comprend qu'un siège conducteur (ici placé du côté gauche) et un siège passager (éventuellement escamotable, éventuellement de type biplace (ou banquette), et ici situé du côté droit).

On notera que le rang un pourrait comporter un ou deux sièges passager de type monoplace.

Chaque siège comprend un dossier et une assise, éventuellement solidarisés l'un à l'autre. Chaque assise comporte une armature solidarisée à une paire de brancards d'assise BAj qui est montée en translation longitudinale (suivant X) sur une paire de glissière GLj solidarisée fixement sur le plancher PL du véhicule. Chaque dossier est de préférence monté à rotation autour d'au moins un axe sensiblement parallèle à la direction transversale Y et éventuellement couplé à l'armature d'assise.

Comme illustré sur la figure 1, un dispositif de protection (ou « d'arrêt de charge ») D, selon l'invention, comprend au moins deux cloisons de protection CPj et deux paires de bielles BCj.

Les deux cloisons de protection CPj sont destinées à être installées respectivement derrière le siège conducteur et le siège passager(s), et donc à être respectivement associées à ces sièges et à leurs paires de glissières GLj correspondantes. Par ailleurs, chaque cloison de protection CPj comprend une partie supérieure et une partie inférieure.

Les deux bielles BCj de chaque paire comprennent des extrémités inférieures, qui sont destinées à être solidarisées à rotation respectivement à des parties arrière de brancards d'assise BAj de la paire associée, et des extrémités supérieures, qui sont solidarisées à rotation respectivement aux parties inférieures des cloisons de protection CPj associées.

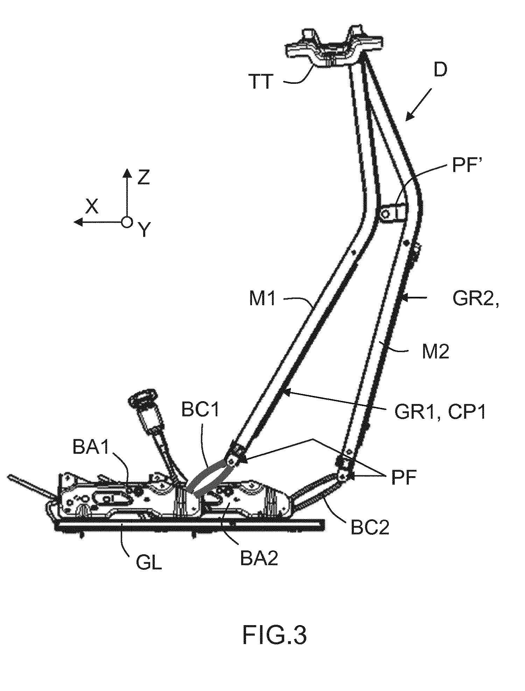

A cet effet, la partie inférieure de chaque cloison de protection CPj peut, par exemple, comprendre deux pattes de fixation PF qui sont solidarisées à rotation respectivement aux extrémités supérieures des bielles BCj de la paire associée, comme illustré non limitativement sur les figures 1 et 3. Cette solidarisation peut se faire suivant des axes sensiblement parallèles à la direction transversale Y.

La partie supérieure de chaque cloison de protection CPj est destinée à être solidarisée à rotation à une partie TT du toit du véhicule. Cette rotation se fait suivant une direction qui est sensiblement parallèle à la direction transversale Y, comme illustré sur la figure 2.

Ainsi, chaque cloison de protection CPj peut être entraînée en rotation par rapport à la partie TT du toit lorsque la paire de brancards d'assise BAj associée (et donc le siège associé) est translaté(e) par rapport à la paire de glissières GLj correspondante. On comprendra en effet que lorsque l'on translate un siège par rapport à la paire de glissières GLj associée, la partie inférieure de la cloison de protection CPj qui est couplée à ce siège est également entraînée. Mais du fait que ce dernier couplage se fait via des bielles BCj dont les extrémités supérieure et inférieure sont montées à rotation, cet entraînement se traduit par une rotation par rapport au toit.

On a schématiquement illustré sur la figure 3 l'état dans lequel se trouve le dispositif de protection D lorsque le siège passager (et donc ses brancards d'assise BA2) est (sont) décalé(s) longitudinalement vers l'arrière du véhicule par rapport au siège conducteur (et donc à ses brancards d'assise BA1). Comme on peut l'observer sur la figure 3, du fait de ce décalage longitudinal, la cloison de protection CP2 (associée au siège passager) est décalée angulairement (vers l'arrière) par rapport à la cloison de protection CP1 (associée au siège conducteur). En l'absence de décalage longitudinal entre les deux paires de brancards d'assise BAj, la désorientation angulaire entre les deux cloisons de protection CPj est sensiblement nulle, comme illustré sur la figure 1. Cela permet alors aux cloisons de protection CPj de se prolonger l'une l'autre pour donner une impression visuelle de continuité.

Comme illustré non limitativement sur la figure 2, le couplage en rotation de la partie supérieure de chaque cloison de protection CPj à la partie TT du toit peut se faire au moyen d'au moins une charnière CH (et de préférence au moins deux). Dans ce cas, la partie supérieure de chaque cloison de protection CPj comprend une première sous-partie d'au moins une charnière CH, destinée à être solidarisée à rotation à une seconde sous-partie complémentaire de cette même charnière CH, qui est solidarisée fixement à une traverse définissant la partie TT du toit. On notera que la partie TT pourrait être une tôle définissant le toit. Mais lorsque le véhicule comprend une traverse de toit il est préférable de l'utiliser comme élément supérieur d'ancrage (en rotation) des cloisons de protection CPj. On notera également que toute articulation assurant une rotation autour d'un unique axe transversal peut être utilisée à la place d'une charnière CH.

On notera également qu'afin de faciliter la visibilité vers l'arrière du véhicule, il est avantageux, comme illustré non limitativement sur les figures 1 et 2, que la partie supérieure de l'une au moins des cloisons de protection CPj comprenne une grille GRj fixe. On notera qu'une grille GRj peut éventuellement résulter de la création de trous traversants dans une partie au moins d'une paroi initialement pleine.

Dans l'exemple non limitatif illustré sur les figures 1 et 2, chacune des cloisons de protection CPj comprend une grille GRj fixe dans sa partie supérieure. Mais seule l'une des deux cloisons de protection CPj pourrait comprendre une grille GRj fixe. Cette grille GRj est par exemple solidarisée fixement à deux montants Mj de sa cloison de protection CPj. On notera que la grille GR2 de la cloison de protection CP2 comprend ici sur sa face avant (orientée vers l'avant du véhicule) une pièce de fixation PF' destinée à permettre la fixation du renvoi de sangle de ceinture de sécurité pour un passager central lorsque le siège passager(s) est une banquette. Cette pièce de fixation PF' est fixée sur un montant M3 qui est dimensionné pour respecter les normes en vigueur. Mais la grille GR2 pourrait ne pas comprendre une telle pièce de fixation PF' lorsque le siège passager(s) est monoplace.

On notera également, comme illustré non limitativement sur la figure 1, que la partie inférieure de chaque cloison de protection CPj comprend de préférence une paroi pleine PPj.

Egalement comme illustré non limitativement sur la figure 1, la cloison de protection CP1, qui est destinée à être couplée au siège conducteur, comprend préférentiellement une paroi pleine PP1 fixe. Cette paroi pleine PP1 est par exemple solidarisée fixement à deux montants M1 de sa cloison de protection CP1. On notera que la grille GR1 peut soit être une pièce différente de la paroi pleine PP1 associée, soit être définie dans une sous-partie d'une paroi pleine PP1.

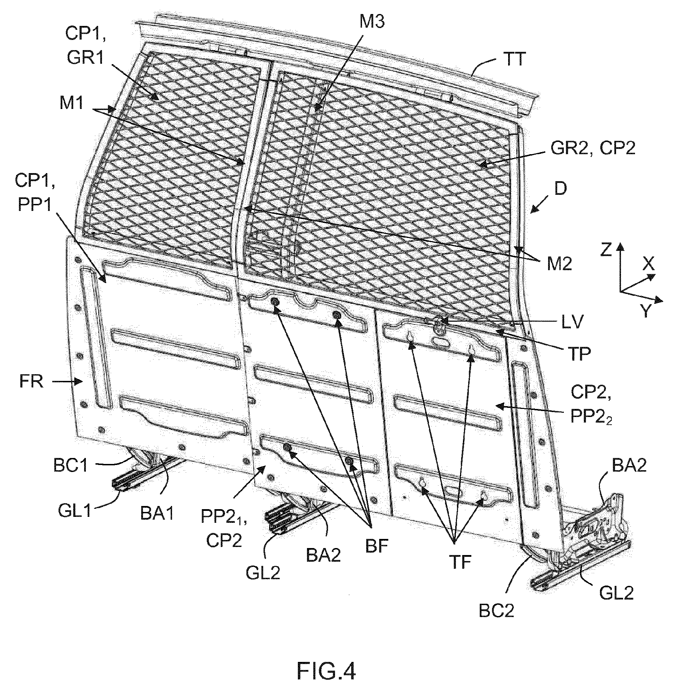

Egalement comme illustré non limitativement sur les figures 1 et 4, la cloison de protection CP2, qui est destinée à être couplée au siège passager(s), comprend préférentiellement une paroi pleine PP2 comportant une première sous-partie PP2₁ fixe et une seconde sous-partie PP2₂ déplaçable.

Dans l'exemple non limitatif illustré sur les figures 1 et 4, la seconde sous-partie PP2₂ est amovible et propre à être solidarisée à la première sous-partie PP2₁ après avoir été retournée. Pour ce faire, la première sous-partie PP2₁ peut comprendre une face arrière FR munie de quatre pions ou boulons de fixation BF (deux supérieur(e)s et deux inférieur(e)s). De son côté, la seconde sous-partie PP2₂ peut comprendre, d'une part, sur sa face avant FV deux crochets CF destinés à permettre le maintien de sa partie inférieure sur une traverse inférieure de la cloison de protection CP2, et, d'autre part, sur sa face arrière FR quatre trous ou encoches TF destiné(e)s à loger les têtes des quatre pions ou boulons de fixation BF une fois qu'elle a été manuellement retournée de 180°. De plus, et comme illustré sur la figure 4, on prévoit sur une traverse intermédiaire TP de la cloison de protection CP2, dans une partie située au-dessus de la seconde sous-partie PP2₂, un loquet de verrouillage LV monté à rotation et destiné à immobiliser la partie supérieure de seconde sous-partie PP2₂ lorsque cette dernière (PP2₂) est dans une position qui interdit le passage d'une extrémité de charge vers le siège passager(s) rabattu ou escamoté. Cette position est celle qui est illustrée sur les figures 1 et 4. On comprendra que pour déplacer la seconde sous-partie PP2₂, on doit entraîner en rotation le loquet de verrouillage LV sur environ ¼ de tour afin de libérer la partie supérieure de la seconde sous-partie PP2₂, puis on doit tirer cette dernière (PP2₂) vers l'arrière du véhicule et légèrement vers le haut pour dégager ses crochets CF de la traverse inférieure, puis on doit retourner de 180° la seconde sous-partie PP2₂ pour que sa face arrière soit placée en regard de la face arrière de la première sous-partie PP2₁, puis on doit plaquer la seconde sous-partie PP2₂ contre la première sous-partie PP2₁ en prenant soin de faire pénétrer les têtes des pions ou boulons BF dans les trous TF correspondants pour que la seconde sous-partie PP2₂ soit suspendue sur la première sous-partie PP2₁. On notera qu'au lieu de suspendre la seconde sous-partie PP2₂ sur la première sous-partie PP2₁, il est possible de la placer sur le plancher PL du véhicule ou bien de l'entreposer à l'extérieur du véhicule.

Dans une variante de réalisation non représentée, la seconde sous-partie PP2₂ est propre à se translater sensiblement parallèlement à la première sous-partie PP2₁. A cet effet, la cloison de protection CP2 peut comprendre deux traverses (une intermédiaire TP et une inférieure) définissant des glissières dans lesquelles peuvent coulisser des parties supérieure et inférieure de la seconde sous-partie PP2₂.

On comprendra que cette seconde sous-partie PP2₂ définit avantageusement une trappe amovible ou coulissante (transversalement) destinée, lorsqu'elle est déplacée, à permettre le passage au travers de la cloison de protection CP2 d'une extrémité d'un objet présentant une grande extension suivant la direction longitudinale X, une fois le dossier du siège passager(s) rabattu ou une fois le siège passager(s) escamoté.

Grâce à l'invention, un véhicule peut être équipé d'un dispositif de protection d'une grande simplicité, solidement installé dans le véhicule, permettant les translations longitudinales des sièges avant, y compris indépendamment l'un de l'autre, et ne nécessitant aucune intervention de l'usager (du fait que la translation du siège provoque automatiquement un changement de position de la cloison de protection associée). De plus, ce dispositif de protection peut permettre de moduler l'espace de rangement tout en continuant d'assurer la protection du conducteur lorsqu'il possède au moins une sous-partie coulissante transversalement.

## Revendications

1. Dispositif de protection (D) pour des sièges conducteur et passager(s) comprenant chacun une paire de brancards d'assise (BAj) montée en translation sur une paire de glissières (GLj) solidarisée à un plancher (PL) d'un véhicule utilitaire, ledit dispositif (D) comprenant deux cloisons de protection (CPj) destinées à être installées respectivement derrière lesdits sièges conducteur et passager(s), **caractérisé en ce qu'**il comprend deux paires de bielles (BCj) comprenant des extrémités inférieures, destinées à être solidarisées à rotation respectivement aux brancards d'assise (BAj) d'une paire associée, et des extrémités supérieures, et **en ce que** chacune desdites cloisons de protection (CPj) comprend une partie inférieure, destinée à être solidarisée à rotation aux extrémités supérieures des bielles (BCj) d'une paire associée, et une partie supérieure, destinée à être solidarisée à rotation à une partie (TT) d'un toit dudit véhicule, de sorte qu'elle puisse être entraînée en rotation par rapport à ladite partie (TT) du toit en cas de translation de la paire de brancards d'assise (BAj) associée par rapport à la paire de glissières (GLj) correspondante.

2. Dispositif selon la revendication 1, **caractérisé en ce que** ladite partie supérieure de l'une au moins desdites cloisons de protection (CPj) comprend une grille (GRj) fixe.

3. Dispositif selon l'une des revendications 1 et 2, **caractérisé en ce que** ladite partie inférieure de chaque cloison de protection (CPj) comprend une paroi pleine (PPj).

4. Dispositif selon la revendication 3, **caractérisé en ce que** la cloison de protection (CP1), destinée à être couplée audit siège conducteur, comprend une paroi pleine (PPj) fixe.

5. Dispositif selon l'une des revendications 3 et 4, **caractérisé en ce que** la cloison de protection (CP2), destinée à être couplée audit siège passager(s), comprend une paroi pleine (PP2) comportant une première sous-partie (PP2₁) fixe et une seconde sous-partie (PP2₂) propre à se translater sensiblement parallèlement à ladite première sous-partie (PP2₁).

6. Dispositif selon l'une des revendications 3 et 4, **caractérisé en ce que** la cloison de protection (CP2), destinée à être couplée audit siège passager(s), comprend une paroi pleine (PP2) comportant une première sous-partie (PP2₁) fixe et une seconde sous-partie (PP2₂) amovible et propre à être solidarisée à ladite première sous-partie (PP2₁) après avoir été retournée.

7. Dispositif selon l'une des revendications 1 à 6, **caractérisé en ce que** ladite partie supérieure de chaque cloison de protection (CPj) comprend une sous-partie d'au moins une charnière (CH), destinée à être solidarisée à rotation à une sous-partie complémentaire de cette même charnière (CH), qui est solidarisée fixement à une traverse définissant ladite partie (TT) du toit.

8. Dispositif selon l'une des revendications 1 à 7, **caractérisé en ce que** ladite partie inférieure de chaque cloison de protection (CPj) comprend deux pattes de fixation (PF) solidarisées à rotation respectivement aux extrémités supérieures des bielles (BCj) de la paire associée.

9. Véhicule utilitaire comprenant un toit et un plancher (PL) sur lequel sont solidarisées fixement deux paires de glissières (GLj) auxquelles sont couplées en translation respectivement deux paires de brancards d'assise (BAj) de sièges conducteur et passager(s), **caractérisé en ce qu'**il comprend en outre un dispositif de protection (D) selon l'une des revendications précédentes, solidarisé à rotation auxdites paires de brancards d'assise (BAj) et à une partie (TT) dudit toit.

## Patentansprüche

1. Schutzvorrichtung (D) für Fahrer- und Beifahrersitze, jeweils ein Sitzflächentransportgestell (BAj) umfassend, das verschiebbar auf einem Gleitschienenpaar (GLj) montiert ist, das fest mit einer Bodenplatte (PL) eines Nutzfahrzeuges verbunden ist, wobei die besagte Vorrichtung (D) zwei Schutzwände (CPj) umfasst, die dazu bestimmt sind, jeweils hinter den besagten Fahrer- und Beifahrersitzen installiert zu werden, **dadurch gekennzeichnet, dass** sie zwei Koppelstangenpaare (BCj) umfasst, die untere Enden umfassen, die dazu bestimmt sind, drehend fest mit jeweils den Sitzflächentransportgestellen (BAj) eines zugeordneten Paares verbunden zu werden, sowie obere Enden, und dadurch, dass jede der besagten Schutzwände (CPj) einen unteren Abschnitt umfasst, der dazu bestimmt ist, drehend fest mit den oberen Enden der Koppelstangen (BCj) eines zugeordneten Paares verbunden zu werden, sowie einen oberen Abschnitt, der dazu bestimmt ist, drehend fest mit einem Abschnitt (TT) eines Daches des besagten Fahrzeugs verbunden zu werden, sodass er im Falle einer Verschiebung des zugeordneten Sitzflächentransportgestellpaares (BAj) im Verhältnis zum entsprechenden Gleitschienenpaar (GLj), im Verhältnis zum besagten Abschnitt (TT) des Daches in Drehung versetzt werden kann.

2. Vorrichtung nach Anspruch 1, **dadurch gekennzeichnet, dass** der besagte obere Abschnitt von zumindest einer der besagten Schutzwände (CPj) ein festes Gitter (GRj) umfasst.

3. Vorrichtung nach einem der Ansprüche 1 und 2, **dadurch gekennzeichnet, dass** der besagte untere Abschnitt einer jeden Schutzwand (CPj) eine volle Wand (PPj) umfasst.

4. Vorrichtung nach Anspruch 3, **dadurch gekennzeichnet, dass** die Schutzwand (CP1), die dazu bestimmt ist, an den besagten Fahrersitz gekoppelt zu werden, eine feste volle Wand (PPj) umfasst.

5. Vorrichtung nach einem der Ansprüche 3 und 4, **dadurch gekennzeichnet, dass** die Schutzwand (CP2) die dazu bestimmt ist, an den besagten Beifahrersitz gekoppelt zu werden, eine volle Wand (PP2) umfasst, die einen ersten festen Unterabschnitt (PP2₁) und einen zweiten Unterabschnitt (PP2₂) umfasst, der geeignet ist, sich in etwa parallel zum besagten ersten Unterabschnitt (PP2₁) zu verschieben.

6. Vorrichtung nach einem der Ansprüche 3 und 4, **dadurch gekennzeichnet, dass** die Schutzwand (CP2) die dazu bestimmt ist, an den besagten Beifahrersitz gekoppelt zu werden, eine volle Wand (PP2) umfasst, die einen ersten festen Unterabschnitt (PP2₁) und einen zweiten Unterabschnitt (PP2₂) umfasst, der abnehmbar und geeignet ist, sich, nachdem er umgedreht worden ist, fest mit dem ersten Unterabschnitt (PP2₁) zu verbinden.

7. Vorrichtung nach einem der Ansprüche 1 bis 6, **dadurch gekennzeichnet, dass** der besagte obere Abschnitt einer jeden Schutzwand (CPj) einen Unterabschnitt mit zumindest einem Scharnier (CH) umfasst, das dazu bestimmt ist, drehend fest mit einem ergänzenden Unterabschnitt dieses selben Scharniers (CH) verbunden zu werden, das feststehend mit einer Traverse verbunden ist, die den besagten Abschnitt (TT) des Daches definiert.

8. Vorrichtung nach einem der Ansprüche 1 bis 7, **dadurch gekennzeichnet, dass** der besagte untere Abschnitt einer jeden Schutzwand (CPj) zwei Befestigungslaschen (PF) umfasst, die drehend fest jeweils mit den oberen Enden der Koppelstangen (BCj) des zugeordneten Paares verbunden sind.

9. Nutzfahrzeug, ein Dach und eine Bodenplatte (PL) umfassend, auf dem feststehend zwei Gleitschienenpaare (GLj) befestigt sind, mit denen jeweils zwei Sitzflächentransportgestellpaare (BAj) von Fahrer- und Beifahrersitzen verschiebbar verbunden sind, **dadurch gekennzeichnet, dass** es darüber hinaus eine Schutzvorrichtung (D) nach einem der vorherigen Ansprüche umfasst, die drehend fest mit den Sitzflächentransportgestellpaaren (BAj) und einem Abschnitt (TT) des besagten Daches verbunden ist.

## Claims

1. Protection device (D) for the driver and passenger seats including for each one a pair of seat bar frames (BAj) mounted in a moveable manner on a pair of slide rails (GLj) solidly fixed to the floor (PL) of a utility vehicle, the said device (D) comprises two protective panels (CPj) destined to be installed respectively behind the driver and passenger seats, **characterised in that** they include two pairs of rods (BCj) including lower extremities, destined to be rotationally fixed respectively to the associated pair of seat bar frames (BAj), and the upper extremities, **in that** each of the said protective panels (CPj) includes a lower part, destined to be solidly fixed in rotation to the upper extremities of the rods (BCj) of an associated pair, and an upper part, destined to be solidly fixed in rotation to a part (TT) of the vehicle roof, so that this may be rotated compared to the said part of the roof (TT) in case of movement of the pair of associated seat bar frames(BAj) relative to the corresponding pair of slide rails (GLj).

2. Process according to claim 1 **characterised in that** the said upper part of at least one of the said protective panels (CPj) includes a fixed grill (GRj).

3. Device according to one of the claims 1 and 2, **characterised in that** the said lower part of each protective panel (CPj) includes a full panel (PPj).

4. Device according to claim 3, **characterised in that** the protective panel (CP1) destined to be connected to the driver's seat includes a fixed full panel (PPj).

5. Device according to one of the claims 3 and 4, **characterised in that** the protective panel (CP2) destined to be connected to the said passenger seat, includes a full panel (PP2) including a first fixed sub-section (PP2₁) and a second sub-section (PP2₂) able to move essentially parallel to the aforementioned first sub-section (PP2₁).

6. Device according to one of the claims 3 and 4, **characterised in that** the protective panel (CP2) destined to be connected to the said passenger seat includes a full panel (PP2) including a first fixed sub-section (PP2₁) and a second moveable sub-section (PP2₂) able to be solidly fixed to the said first sub-section (PP2₁) after having been turned back.

7. Device according to one of the claims 1 to 6 **characterised in that** the said upper part of each protective panel (CPj) includes a sub-part of at least one hinge (CH), destined to be rotationally solid to a complementary sub-part of this same hinge (CH), which is solidly fixed to a cross piece defining the said part (TT) of the roof.

8. Device according to one of the claims 1 to 7 **characterised in that** the said lower part of each protective panel (CPj) includes two fixing pads (PF) rotationally fixed respectively to the upper extremities of the associated pair of rods (BCj).

9. Utility vehicle comprising a roof and a floor (PL) to which are solidly fixed two pairs of slide rails (GLj) to which are connected respectively two pairs of seat bar frames (BAj) of the driver and passenger seats, **characterised in that** in addition a protective device (D) is included according to one of the precedent claims, solidly fixed in rotation to the said two pairs of seat bar frames (BAj) and to a part of the said roof (TT).
